# EUROPEAN PATENT SPECIFICATION

(11) **EP 3 890 195 B1**
(45) Date of publication and mention of the grant of the patent: **15.05.2024**
(21) Application number: 21162767.4
(22) Date of filing: 16.03.2021
(51) Int. Cl.: H04B 3/54

(54) **APPARATUS AND METHODS FOR G3-PLC BOOTSTRAP IN HYBRID NETWORKS**
VORRICHTUNG UND VERFAHREN FÜR G3-PLC-BOOTSTRAP IN HYBRIDEN NETZWERKEN
APPAREIL ET PROCÉDÉS POUR LE G3-PLC BOOTSTRAP DANS DES RÉSEAUX HYBRIDES

(30) Priority: 31.03.2020 IT 202000006739
(43) Date of publication of application: 06.10.2021
(60) Divisional application: 24166384.8
(73) Proprietor: STMicroelectronics S.r.l., 20864 Agrate Brianza (MB) (IT)
(72) Inventor: VARESIO, Matteo, 10081 Castellamonte (Torino) (IT); TREFFILETTI, Paolo, 24057 Martinengo (Bergamo) (IT)
(74) Representative: Bosotti, Luciano

(56) References cited:
- US-A1- 2012 236 758

## Description

### TECHNICAL FIELD

The present description relates generally to apparatus and methods for G3-PLC bootstrap in hybrid networks. The embodiments presented herein are related to communications, in particular to a scenario with different types of media used in the same network, such as a power line communication (PLC) channel and a radio frequency (RF) wireless channel.

The embodiments are based on an extension of PLC protocols to support RF channel as additional medium in order to create a hybrid network.

### BACKGROUND

G3-PLC is a protocol that provides reliable communication on an electrical grid, using power line communication technology. It is hosted by the ITU standard organization (ITU-T G.9903) and it is supported by an international association, the G3-PLC Alliance. Sub-GHz RF is a widely used technology for Smart Grid, Smart City and Smart Home applications.

The G3-PLC technology is extended with Sub-GHz RF to establish a hybrid network.

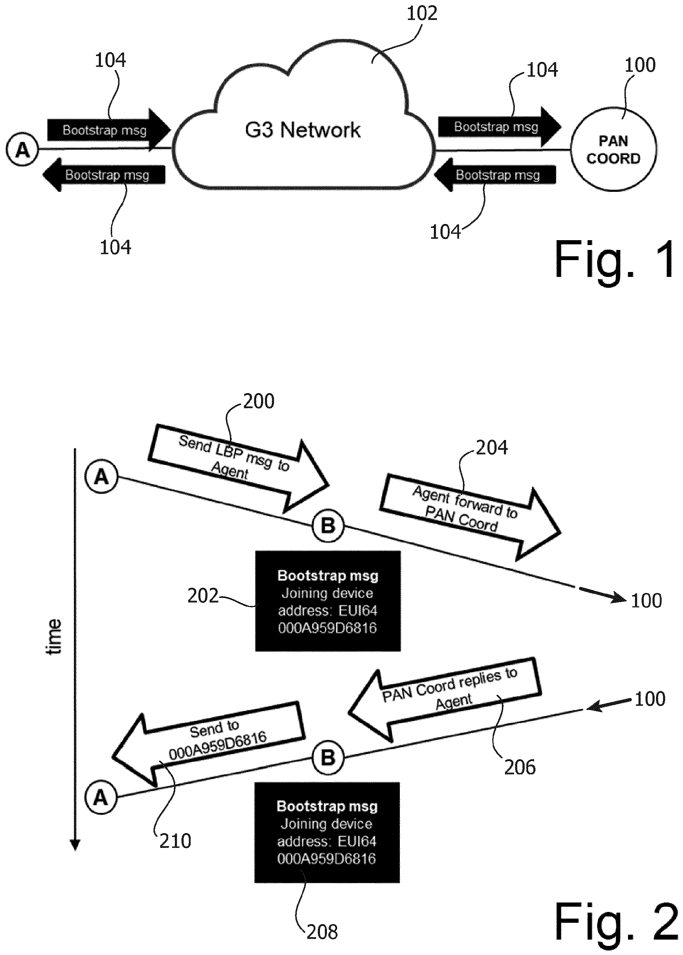

As illustrated in Figure 1, in PLC networks, and more specifically in G3-PLC networks, as soon as a device (e.g., a smart meter) A is powered on, it attempts to access the network, communicating with the PAN Coordinator - 100, the central device of the system.

That process is called *bootstrap* and is defined as:
Obtaining security credentials
Associating with the PAN Coordinator
Obtaining a 16-bit short address
Constructing an IPv6 address

This is exemplified in Figure 1, where 102 denotes a G3 network and 104 indicates bootstrap messages.

After bootstrap is completed, the device A is part of the G3-PLC network. The device can then reach other devices in the network using 16-bit short address, and the routing algorithm is enabled.

Prior to bootstrap completion, the device can communicate only by point-to-point communications using EUI64 addressing (routing and MAC ciphering are unavailable).

The example in Figure 2 shows the bootstrap procedure in a G3 PLC (only) network:
Device A powers on and requests to join the network;
Device A sends (as indicated at 200) an LBP message composing a Bootstrap message (LBP) 202 storing inside its (joining device) address, e.g., EUI64 000A959D6816;
Device A sends the Bootstrap messages to the PAN Coordinator 100, either directly or through an agent (here a Device B is illustrated as the agent) which at 204 forwards the messages to the PAN Coordinator 100;
the agent is a Device B already part of the network, which is able to communicate to the PAN Coordinator 100;
When the PAN Coordinator 100 replies, it sends a bootstrap message 206 to Device B;

The Device B transmits the message to the final destination (Device A) as a Bootstrap message 208 joining the device address, e.g., EUI64 000A959D6816, to the final destination (Device A) which picks up its EUI64 address from the message content (as sent at 210 in Figure 2).

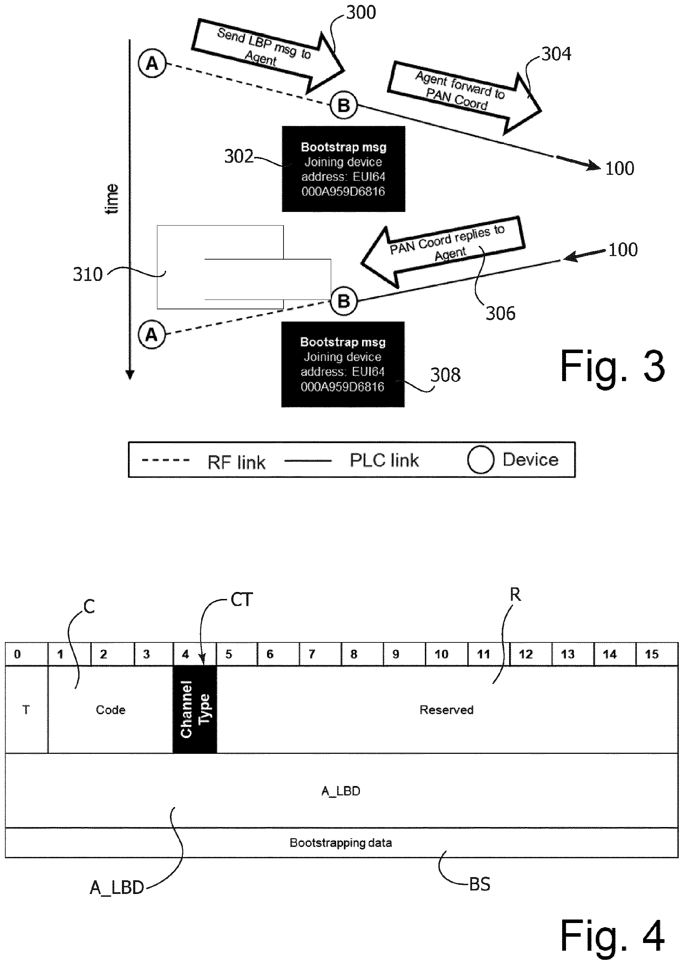

The example in Figure 3 shows the bootstrap procedure in a G3 hybrid network (PLC - continuous lines and RF - dashed lines):
Device A composes Bootstrap messages (LBP) storing its EUI64 address inside;
Device A sends at 300 towards the PAN Coordinator 100 LBP Bootstrap messages 302 (joining the device address, e.g. EUI64 000A959D6816), which again may be either directly or through an Agent B which at 304 forwards the messages to the PAN Coordinator 100, selecting one of the available channels (e.g., PLC or RF);
When the PAN Coordinator 100 replies. it sends at 306 to the Agent - Device B the Bootstrap message 308 joining the device address, e.g., EUI64 000A595D6816;

The Device B desires to transmit the message to the final destination (Device A).

The destination address is the EUI64 address embedded in the Bootstrap message, but a problem exists regarding which channel to use for the transmission to Device A as exemplified at 310 in Figure 3.

Document US 2012/236758 A1 discusses providing a simple connect setup function for hybrid networks that allows a user to add devices optionally having a number of different network interfaces (e.g., that facilitate communications using different network technologies or protocols) to a hybrid network in a single, simplified operation that alleviates the need for the user to individually connect and/or configure a multitude of different network interfaces. The simple connect setup function also alleviates the burden for the user to know on which devices the simple connect setup function must be activated for successful simple connect setup.

### OBJECT AND SUMMARY

An object of one or more embodiments is to contribute in addressing the problems discussed above.

According to one or more embodiments, that object is achieved by means of agent device having the features set forth in the claim 2 that follows.

One or more embodiments may relate to corresponding methods.

The invention is defined by the appended claims. The embodiments not covered by the claims do not form part of the invention but are useful for understanding the invention.

The claims are an integral part of the technical teaching provided herein in respect of the embodiments.

### BRIEF DESCRIPTION OF THE FIGURES

One or more embodiments will now be described, by way of example only, with reference to the annexed figures, wherein:
Figures 1 to 3 have been discussed in the foregoing;
Figures 4 and 5 are illustrative of a first exemplary scenario according to the present disclosure;
Figure 6 illustrates a metering system architecture wherein embodiments of the disclosure can be applied;
Figures 7 and 8 are illustrative of a further exemplary scenario according to the present disclosure;
Figure 9 is illustrative of an embodiment according to the present disclosure;
Figure 10 is a block diagram of a processing system configured to perform methods according to the present disclosure; and
Figure 11 is a block diagram of a transceiver 700 adapted transmit and receive signaling over a telecommunications network according to the present disclosure.

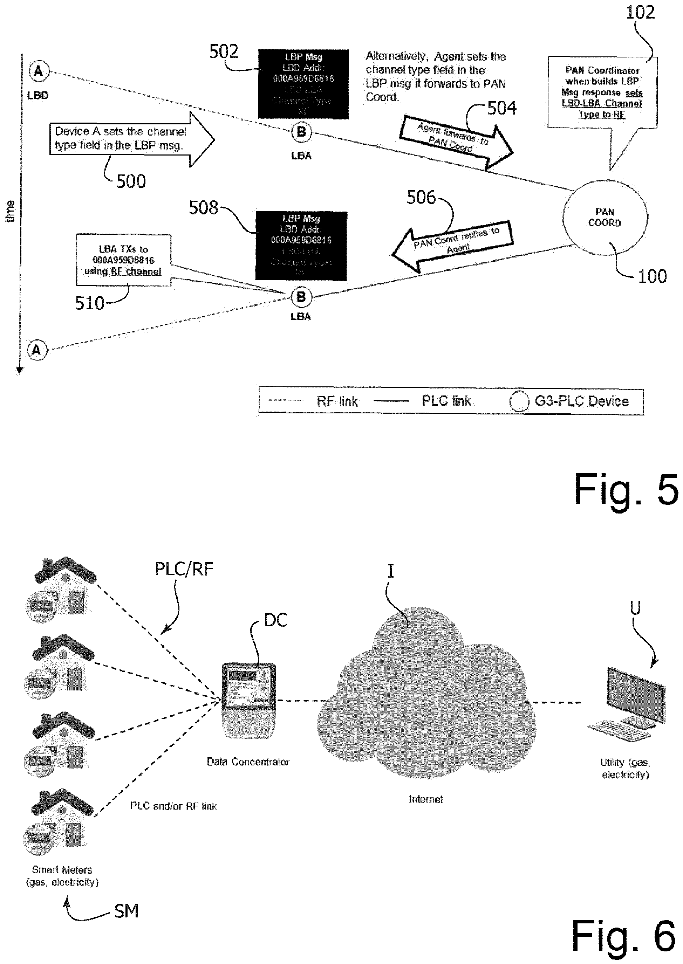

It is noted that while mainly figures 6 and 9 to 11 correspond to the embodiments of the claims, the other figures in the description provide useful examples for understanding of the invention.

### DETAILED DESCRIPTION OF EMBODIMENTS

Examples of the invention will be described below.

A first exemplary scenario illustrated in Figures 4 and 5 defines a new field CT in LBP protocol messages (along with a Code field C, an A_LBD field, a Bootstrapping data field BS, and a Reserved field R) to specify the channel type (or similarly medium type or media type) over which data between the LBP (Bootstrapping Device) and the LBA (Bootstrapping Agent) has to be exchanged. The new field CT is referred to as the Channel Type field (or similarly medium type field or media type field) or Channel Type indicator (or similarly medium type indicator or media type indicator). Although the discussion focuses on Channel Type, Channel Type field, and Channel Type indicator, other names may be used. The use of Channel Type, Channel Type field, and Channel Type indicator should not be construed as being limiting to the scope of the embodiments. The channel type field may be as short as a 1-bit field.

The example in Figure 5 shows a bootstrap procedure in a hybrid network (RF link - dashed lines and PLC link - continuous lines):
Device A sets the channel type field in the LBP message which at 500 is sent towards the PAN Coordinator 100 as a message 502 (LBP message/LBD address, e.g., EUI64 000A959D6816 and LBD/LBA channel type: RF), which again may be either directly or through an Agent B which at 504 forwards the messages to the PAN Coordinator 100, selecting one of the available channels (e.g., PLC or RF) ;
The PAN Coordinator 100 builds at 502 LBP message response sets with LBD-LBA Channel Type to RF;
When the PAN Coordinator 100 replies it sends at 506 to the Agent - Device B messages 508 (LBP message/LBD address, e.g., EUI64 000A959D6816 and LBD/LBA channel type: RF);

At 510, the Device B transmits the message to the final destination (Device A) at the address 000A959D6816 using a RF channel.

Smart metering system architecture wherein embodiments of the disclosure can be advantageously applied is illustrated in Figure 6.

Smart metering system architecture as illustrated in Figure 6 comprises Smart Meters (gas, electricity) SM connected via a PLC and/or RF link (PLC/RF) to a Data Concentrator DC which in turn interfaces with a Utility (gas, electricity) U via the Internet I.

Examples of the disclosure have many advantages over known solutions such as extending G3-PLC technology to be used in hybrid networks, providing capability to characterize each link even in hybrid networks, and maintaining compatibility with standard G3-PLC implementation.

Examples of the disclosure achieve these advantages by modifying the format of some messages in order to carry new information (i.e., in G3-PLC modifying LBP messages).

A second example of the disclosure is discussed next.

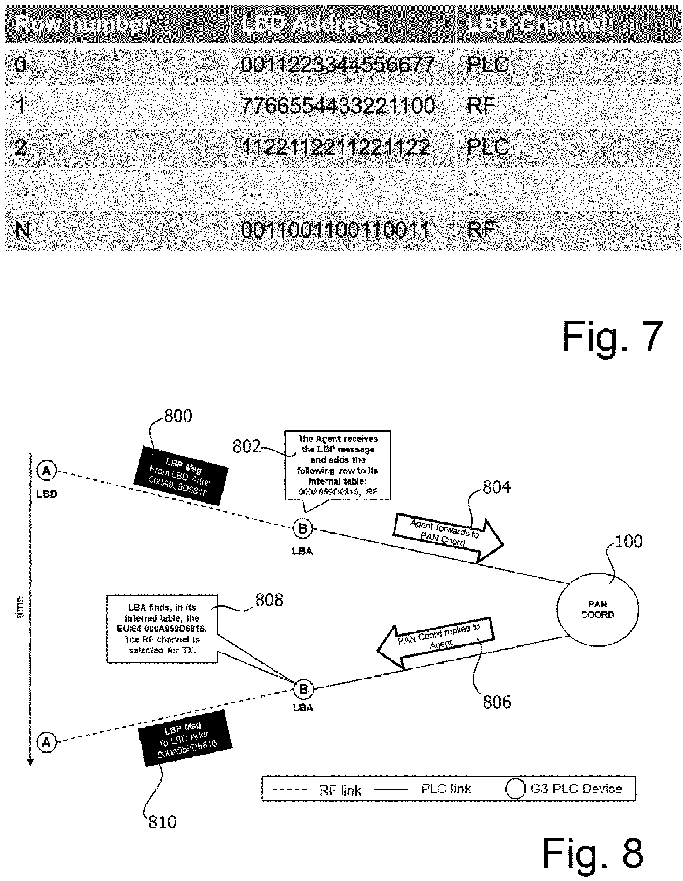

In the second exemplary scenario, the Agent maintains a table (see Figure 7) in its internal volatile memory in which, for example, each row corresponds to the following associations:
<LBD address>, <LBD channel used to TX>, where the LBD address is the address of the device that is bootstrapping through the Agent, and the LBD channel is the channel type, e.g., PLC or RF, use to transmit to the device.

The example in Figure 8 shows a corresponding bootstrap procedure (again, RF link - dashed lines and PLC link - continuous lines):
Device A sends at 800 an LBP message towards the PAN Coordinator 100 from LBD address 000A959D6816;
The Agent B at 802 receives the LBP message and adds to its internal table a row such as 000A959D6816, RF and at 804 forwards the resulting message to the PAN Coordinator 100;
The PAN Coordinator 100 replies at 806 to the Agent B (LBA) which at 808 finds in its internal table the information 000A959D6816 and the indication that the channel is selected for transmission;

This occurs at 810 with the LBP message sent to the LBD address 000A959D6816.

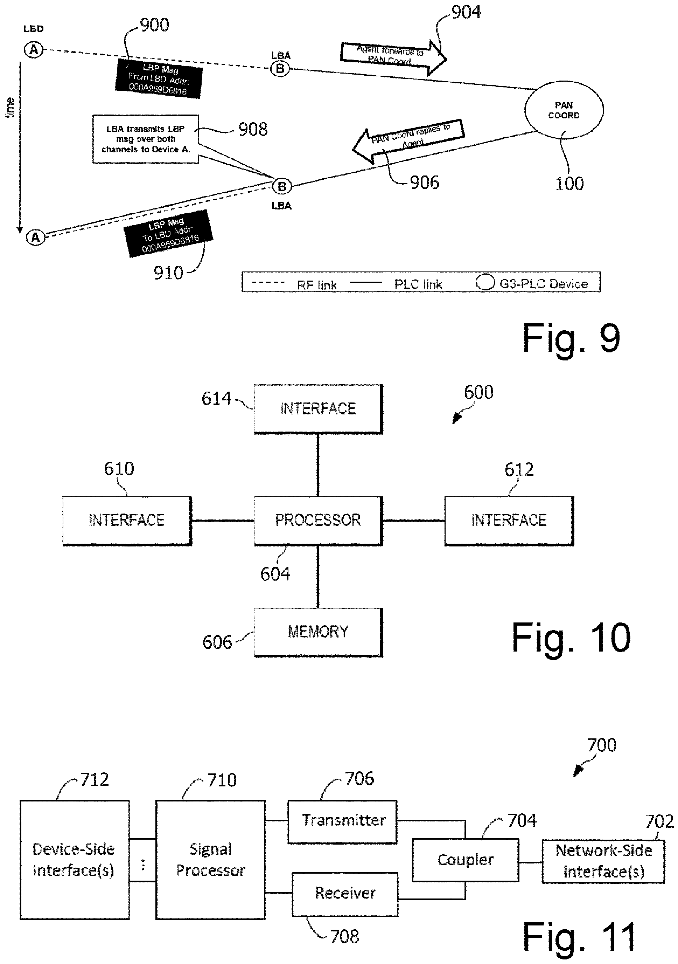

An embodiment of the disclosure is discussed next with reference to Figure 9 (again, RF link - dashed lines and PLC link - continuous lines).

The sequence of Figure 9 is essentially similar to the one of Figure 8 in that Device A sends at 900 a LBP message towards the PAN Coordinator 100 from LBD address 000A959D6816, the Agent B at 904 forwards the resulting message to the PAN Coordinator 100 and the PAN Coordinator 100 replies to the Agent B (LBA) at 906. However, in the embodiment of Figure 9, at 910 the agent transmits the bootstrap message response over both of the channels (e.g., PLC and RF).

Accordingly, an embodiment of the disclosure extends PLC technology to be used in hybrid networks when other media types are used. This allows the device that is registering to the network to use any of the channels. Figure 10 illustrates a block diagram of an embodiment of a processing system 600 for performing methods described herein, which may be installed in a host device, e.g., any of device A, device (agent) B and 100 (PAN Coordinator). As shown, the processing system 600 includes a processor 604, a memory 606, and interfaces 610-614, which may (or may not) be arranged as shown in the figure. The processor 604 may be any component or collection of components adapted to perform computations and/or other processing related tasks, and the memory 606 may be any component or collection of components adapted to store programming and/or instructions for execution by the processor 604. In an embodiment, the memory 606 includes a non-transitory computer readable medium. The interfaces 610, 612, 614 may be any component or collection of components that allow the processing system 600 to communicate with other devices/components and/or a user. For example, one or more of the interfaces 610, 612, 614 may be adapted to communicate data, control, or management messages from the processor 604 to applications installed on the host device and/or a remote device. As another example, one or more of the interfaces 610, 612, 614 may be adapted to allow a user or user device (e.g., personal computer (PC), etc.) to interact/communicate with the processing system 600. The processing system 600 may include additional components not depicted in the figure, such as long term storage (e.g., non-volatile memory, etc.).

In some embodiments, the processing system 600 is included in a network device that is accessing, or part otherwise of, a telecommunications network. In one example, the processing system 600 is in a network-side device in a wireless or wireline telecommunications network, such as a base station, a relay station, a scheduler, a controller, a gateway, a router, an applications server, a data concentrator, or any other device in the telecommunications network. In other embodiments, the processing system 600 is in a user-side device accessing a wireless or wireline telecommunications network, such as a mobile station, a user equipment (UE), a personal computer (PC), a tablet, a wearable communications device (e.g., a smartwatch, etc.), a smart meter, or any other device adapted to access a telecommunications network.

In some embodiments, one or more of the interfaces 610, 612, 614 connects the processing system 600 to a transceiver adapted to transmit and receive signaling over the telecommunications network.

Figure 11 illustrates a block diagram of a transceiver 700 adapted to transmit and receive signaling over a telecommunications network (here, a RF link and/or a PLC link) . The transceiver 700 may be installed in a host device e.g., in any of device A, device (agent) B and 100 (PAN Coordinator). As shown, the transceiver 700 comprises a network-side interface 702, a coupler 704, a transmitter 706, a receiver 708, a signal processor 710, and a device-side interface 712. The network-side interface 702 may include any component or collection of components adapted to transmit or receive signaling over a wireless or wireline telecommunications network. The coupler 704 may include any component or collection of components adapted to facilitate bi-directional communication over the network-side interface 702. The transmitter 706 may include any component or collection of components (e.g., up-converter, power amplifier, etc.) adapted to convert a baseband signal into a modulated carrier signal suitable for transmission over the network-side interface 702. The receiver 708 may include any component or collection of components (e.g., down-converter, low noise amplifier, etc.) adapted to convert a carrier signal received over the network-side interface 702 into a baseband signal. The signal processor 710 may include any component or collection of components adapted to convert a baseband signal into a data signal suitable for communication over the device-side interface(s) 712, or vice-versa. The device-side interface(s) 712 may include any component or collection of components adapted to communicate data-signals between the signal processor 710 and components within the host device (e.g., the processing system 600, local area network (LAN) ports, etc.).

The transceiver 700 may transmit and receive signaling over any type of communications medium. In some embodiments, the transceiver 700 transmits and receives signaling over a wireless medium. For example, the transceiver 700 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), Sub-1 GHz RF, etc.). In such embodiments, the network-side interface 702 comprises one or more antenna/radiating elements. For example, the network-side interface 702 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 700 transmits and receives signaling over a wireline medium, e.g., twisted-pair cable, coaxial cable, optical fiber, Power Line, etc. Specific processing systems and/or transceivers may utilize all of the components shown, or only a subset of the components, and levels of integration may vary from device to device.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by, e.g., a configuration unit/module. The respective units/modules may be hardware, software, or a combination thereof. For instance, one or more of the units/modules may be an integrated circuit, such as field programmable gate arrays (FPGAs) or application-specific integrated circuits (ASICs).

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

For example, according to an aspect of the disclosure, the first communication channel and the second communication channel are the same channel type (e.g., RF and/or PLC).

According to an aspect of the disclosure, a method implemented by an agent device (e.g., Device B) comprises:
receiving, by the agent device (e.g., B) from a device (e.g., A), a bootstrap request message over a first communication channel;
transmitting, by the agent device, to a coordinating device (e.g., 100), a request message comprising the bootstrap request message and an address of the device; receiving, by the agent device, from the coordinating device, a response message comprising a bootstrap response message and the address of the device; and
transmitting, by the agent device, to the device, the response message over a plurality of communication channels, the plurality of communication channels comprising different channel types of communication channels between the agent device and the device.

According to an aspect of the disclosure, the channel types comprise at least a power line communication (PLC) channel type and a radio frequency (RF) channel type. According to an aspect of the disclosure, the plurality of communication channels comprise at least one communication channel of each channel type.

According to an aspect of the disclosure, an agent device comprises:
a memory storing a program; and
a processor configured to execute the program, the program comprising instructions that when executed by the processor, is configured to perform the method as described herein.

## Claims

1. A method implemented by an agent device (B), the method comprising:
receiving (500, 800, 900), by the agent device (B) from a device (A), a bootstrap request message over a first communication channel;
transmitting (504, 804, 904) a request message, by the agent device (B), to a coordinating device (100), the request message comprising the bootstrap request message and an address of the device (A);
receiving (506, 806, 906) a response message, by the agent device (B), from the coordinating device (100), the response message comprising a bootstrap response message and the address of the device (A); and
transmitting (910), by the agent device (B), to the device (A), the response message over a plurality of communication channels comprising different channel types of communication channels between the agent device (B) and the device (A).

2. An agent device (B) comprising:
a memory (606) storing a program; and
a processor (604) configured to execute the program, the program comprising instructions that when executed by the processor (604), configure the agent device (B) to perform the method of claim 1.

## Patentansprüche

1. Verfahren, das von einer Agent-Vorrichtung (B) implementiert wird, wobei das Verfahren umfasst:
Empfangen (500, 800, 900) durch die Agent-Vorrichtung (B) von einer Vorrichtung (A) einer Bootstrap-Anfragenachricht über einen ersten Kommunikationskanal;
Übertragen (504, 804, 904) einer Anfragenachricht durch die Agent-Vorrichtung (B) an eine Koordinierungsvorrichtung (100), wobei die Anfragenachricht die Bootstrap-Anfragenachricht und eine Adresse der Vorrichtung (A) umfasst;
Empfangen (506, 806, 906) einer Antwortnachricht durch die Agent-Vorrichtung (B) von der Koordinierungsvorrichtung (100), wobei die Antwortnachricht eine Bootstrap-Antwortnachricht und eine Adresse der Vorrichtung (A) umfasst; und
Übertragen (910) durch die Agent-Vorrichtung (B) an die Vorrichtung (A) der Antwortnachricht über eine Vielzahl von Kommunikationskanälen, die unterschiedliche Kanaltypen von Kommunikationskanälen zwischen der Agent-Vorrichtung (B) und der Vorrichtung (A) umfassen.

2. Agent-Vorrichtung (B), umfassend:
einen Speicher, (606), der ein Programm speichert; und
einen Prozessor (604), der konfiguriert ist, um das Programm auszuführen, wobei das Programm Anweisungen umfasst, die wenn sie von dem Prozessor (604) ausgeführt werden, die Agent-Vorrichtung (B) konfigurieren, um das Verfahren nach Anspruch 1 durchzuführen.

## Revendications

1. Procédé mis en œuvre par un dispositif d'agent (B), le procédé comprenant :
la réception (500, 800, 900), par le dispositif d'agent (B) à partir d'un dispositif (A), d'un message de demande d'amorçage sur un premier canal de communication ;
la transmission (504, 804, 904) d'un message de demande, par le dispositif d'agent (B), à un dispositif de coordination (100), le message de demande comprenant le message de demande d'amorçage et une adresse du dispositif (A) ;
la réception (506, 806, 906) d'un message de réponse, par le dispositif d'agent (B), à partir du dispositif de coordination (100), du message de réponse comprenant un message de réponse d'amorçage et l'adresse du dispositif (A) ; et
la transmission (910), par le dispositif d'agent (B), au dispositif (A), du message de réponse sur une pluralité de canaux de communication comprenant différents types de canaux de canaux de communication entre le dispositif d'agent (B) et le dispositif (A).

2. Dispositif d'agent (B) comprenant :
une mémoire (606) stockant un programme ; et
un processeur (604) configuré pour exécuter le programme, le programme comprenant des instructions qui, quand elles sont exécutées par le processeur (604), configurent le dispositif d'agent (B) pour réaliser le procédé selon la revendication 1.
